# EUROPEAN PATENT APPLICATION

(11) **EP 3 678 409 A1**
(43) Date of publication of application: **08.07.2020**
(21) Application number: 17927017.8
(22) Date of filing: 28.09.2017
(51) Int. Cl.: H04W 28/06

(54) **SYSTEM INFORMATION CHANGE INDICATION METHOD AND DEVICE**

(71) Applicant: Huawei Technologies Co., Ltd., Longgang District Shenzhen, Guangdong 518129 (CN)
(72) Inventor: LI, Chenwan, Shenzhen Guangdong 518129 (CN); LIN, Bo, Shenzhen Guangdong 518129 (CN)
(74) Representative: Pfenning, Meinig & Partner mbB
(86) International application number: PCT/CN2017/104131
(87) International publication number: WO 2019/061206

(57) **Abstract**

This application discloses a system information change indication method and apparatus, to improve efficiency of obtaining positioning-related system information by a terminal that needs to be positioned. The method includes: determining, by a base station, that a first system information block SIB in to-be-sent system information is changed, and sending, to the terminal, a message carrying a change indication, where the first SIB carries positioning assistance data, and the change indication is used to notify the terminal that the first SIB is changed.

## Description

### TECHNICAL FIELD

This application relates to the field of communications technologies, and in particular, to a system information change indication method and apparatus.

### BACKGROUND

Currently, an application scenario such as an unmanned aerial vehicle, intelligent driving, or a vertical market has a relatively high requirement for positioning accuracy. Areal time kinematic (real time kinematic, RTK) positioning technology may be used to effectively improve the positioning accuracy, and RTK positioning accuracy may reach a centimeter level. In a long term evolution (long term evolution, LTE) R15, a base station receives positioning assistance data sent by a positioning server, adds the positioning assistance data to system information, and sends the system information to a terminal in a broadcast manner. The terminal corrects positioning data of the terminal based on the received positioning assistance data, to implement high positioning accuracy.

In the prior art, if the system information is changed, the base station sends a paging message, and notifies, by using the paging message, the terminal that the system information is changed, and the terminal listens to new system information in a next modification period. Alternatively, if the system message is changed, the base station adds a system information value tag (system Info value tag) to a first system information block (system information block, SIB). If the value tag read by the terminal is different from a value tag stored before, it indicates that the system information is changed and needs to be re-read.

However, if the system information carries the positioning assistance data, using a manner of notifying that the system information is changed in the prior art, processing overheads of a terminal that does not need to be positioned are caused, and efficiency of obtaining the positioning assistance data by a terminal that needs to be positioned is low. How to appropriately indicate that the system information carrying the positioning assistance data is changed is a problem that needs to be resolved.

### SUMMARY

This application provides a system information change indication method and apparatus, to provide a manner of notifying that system information that carries positioning assistance data is changed, reduce processing overheads of a terminal that does not need to be positioned, and improve efficiency of obtaining positioning-related system information by a terminal that needs to be positioned.

According to a first aspect, a system information change indication method is provided. If determining that a first SIB carrying positioning assistance data is changed, a base station notifies a terminal by using a specific change indication. The terminal may determine, based on the change indication, that the SIB carrying the positioning assistance data is changed. A terminal that does not need to be positioned does not need to re-read a changed first SIB. After determining that the first SIB is changed, a terminal that needs to be positioned needs to read the first SIB. In this way, overheads of the terminal that does not need to be positioned can be reduced by clearly indicating whether a positioning-related SIB is changed.

In a possible design, the base station determines that the first system information block SIB in to-be-sent system information is changed, sends, to the terminal, a message carrying the change indication. The first SIB carries the positioning assistance data, and the change indication is used to notify the terminal that the first SIB is changed.

In a possible design, a second SIB in the system information carries at least one value tag, and one of the at least one value tag is used to indicate whether positioning assistance data in specified m first SIBs is changed, where m is a positive integer. In this way, the terminal that needs to be positioned may further clearly determine a specific changed first SIB or specific changed first SIBs by using the value tag, and only need to read the changed first SIB or the first SIB that needs to be read by the terminal, thereby improving efficiency of obtaining the positioning assistance data by the terminal that needs to be positioned.

In a possible design, m=1, the value tag indicates one to one whether the positioning assistance data in the first SIB is changed, and each value tag indicates whether positioning assistance data in a first SIB is changed.

In a possible design, the value tag indicates one to one whether positioning assistance data of a type of satellite navigation systems is changed, in other words, each value tag indicates whether the positioning assistance data of the type of satellite navigation system is changed.

In a possible design, the value tag indicates one to one whether positioning assistance data in a positioning method is changed, in other words, each value tag indicates whether the positioning assistance data in the positioning method is changed.

In a possible design, the second SIB needs to be sent before the first SIB, and in this way, the terminal can obtain an indication of the value tag in advance. Therefore, the second SIB is usually an SIB1.

In a possible design, the change indication is at least one value tag, and one of the at least one value tag is used to indicate whether positioning assistance data in specified m first SIBs is changed, where m is a positive integer.

In a possible design, the specified m first SIBs include public positioning assistance data; or the specified m first SIBs include positioning assistance data related to a satellite navigation system.

In a possible design, the at least one value tag includes a first value tag and a second value tag. The first value tag is used to indicate whether the positioning assistance data in a first type of SIB is changed, and the positioning assistance data included in the first type of SIB is public positioning assistance data, and is applicable to various types of satellite navigation systems. The second value tag is used to indicate whether positioning assistance data in the second type of SIB is changed, and the positioning assistance data included in the second type of SIB is positioning assistance data related to a satellite navigation system, and is applicable to a specified type of satellite navigation system.

In a possible design, the message carrying the change indication includes any one of the following messages: a paging message, a radio resource control RRC message, a long term evolution positioning protocol LPP message, or a system message.

According to a second aspect, a system information change indication method is provided. A terminal obtains a change indication carried in a message sent by a base station. The terminal determines, based on the change indication, that a first system information block SIB that is in system information and that carries positioning assistance data is changed. If needing to be positioned, the terminal reads the first SIB that is in the system information and that carries the positioning assistance data. In this way, overheads of a terminal that does not need to be positioned can be reduced by clearly indicating whether a positioning-related SIB is changed.

In a possible design, a specified second SIB in the system information carries at least one value tag, and any value tag is used to indicate whether positioning assistance data in specified m first SIBs is changed, where m is a positive integer. The method further includes: reading, by the terminal, the at least one value tag carried in the second SIB, determining a changed first SIB in the system information based on the at least one value tag, and reading the changed first SIB. In this way, efficiency of obtaining the positioning assistance data by the terminal that needs to be positioned can be improved.

In a possible design, the change indication is at least one value tag, and any value tag is used to indicate whether positioning assistance data in specified m first SIBs is changed, where m is a positive integer.

In a possible design, the positioning assistance data included in the specified m first SIBs is applicable to various types of satellite navigation systems; or the positioning assistance data included in the specified m first SIBs is applicable to a specified type of satellite navigation system.

In a possible design, the at least one value tag includes a first value tag and a second value tag. The first value tag is used to indicate whether the positioning assistance data in a first type of SIB is changed, and the positioning assistance data included in the first type of SIB is applicable to various types of satellite navigation systems. The second value tag is used to indicate whether positioning assistance data in the second type of SIB is changed, and the positioning assistance data included in the second type of SIB is applicable to a specified type of satellite navigation system.

In a possible design, the message carrying the change indication includes any one of the following messages: a paging message, a radio resource control RRC message, a long term evolution positioning protocol LPP message, or a system message.

According to a third aspect, a system information change indication apparatus is provided. The apparatus has a function of implementing base station behavior in any one of the first aspect and the possible designs of the first aspect. The function may be implemented by hardware, or may be implemented by executing corresponding software by hardware. The hardware or the software includes one or more modules corresponding to the foregoing function.

According to a fourth aspect, a system information change indication apparatus is provided. The apparatus has a function of implementing terminal behavior in any one of the second aspect and the possible designs of the second aspect. The function may be implemented by hardware, or may be implemented by executing corresponding software by hardware. The hardware or the software includes one or more modules corresponding to the foregoing function.

According to a fifth aspect, a base station is provided. A structure of the base station includes a transceiver and a processor. The processor is configured to invoke a set of programs to perform the method in any one of the first aspect and the possible designs of the first aspect.

According to a sixth aspect, a terminal is provided. A structure of the terminal includes a transceiver and a processor. The processor is configured to invoke a set of programs to perform the method in any one of the second aspect and the possible designs of the second aspect.

According to a seventh aspect, a communications system is provided. The system includes the apparatus in the third aspect or the fifth aspect, and the apparatus in the fourth aspect or the sixth aspect.

According to an eighth aspect, a computer storage medium storing a computer program is provided. The computer program includes an instruction used to perform the method in any one of the first aspect, the second aspect, the possible implementations of the first aspect, and the possible implementations of the second aspect.

According to a ninth aspect, an embodiment of this application provides a computer program product including an instruction. When being executed on a computer, the instruction enables the computer to perform the methods in the foregoing aspects.

### BRIEF DESCRIPTION OF DRAWINGS

FIG. 1 is a schematic structural diagram of a communications system according to an embodiment of this application;
FIG. 2 is a flowchart of a system information change indication method according to an embodiment of this application;
FIG. 3 is a schematic diagram of system information change indication signaling according to an embodiment of this application;
FIG. 4 is a first schematic structural diagram of a system information change indication apparatus according to an embodiment of this application;
FIG. 5 is a second schematic structural diagram of a system information change indication apparatus according to an embodiment of this application;
FIG. 6 is a schematic structural diagram of a base station according to an embodiment of this application; and
FIG. 7 is a schematic structural diagram of a terminal according to an embodiment of this application.

### DESCRIPTION OF EMBODIMENTS

The following describes in detail embodiments of this application with reference to the accompanying drawings.

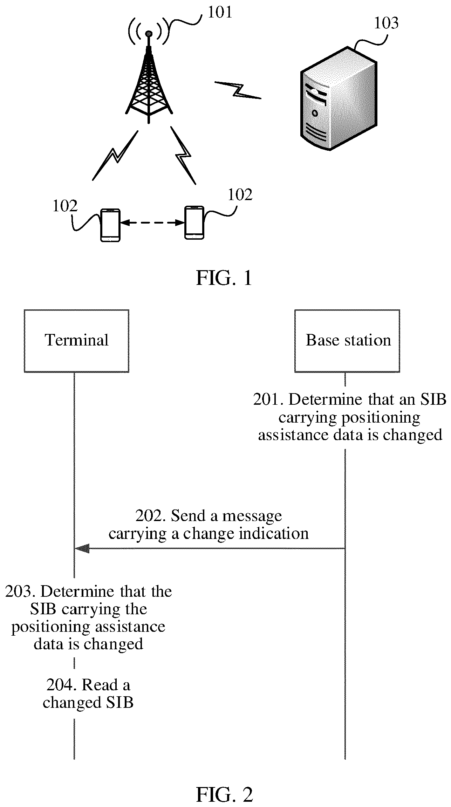

As shown in FIG. 1, a communications system 100 to which an embodiment of this application is applied includes a base station 101, a terminal 102, and a server 103. The base station 101 is an apparatus deployed in a radio access network to provide a wireless communications function for a terminal, and is configured to be connected to the terminal 102 and the server 103. The base station 101 may include various forms of macro base stations, micro base stations, relay stations, access points, and the like. The base station 101 may be applied to systems of different wireless access technologies, for example, to more possible communications systems such as an LTE system or a 5th generation (5th Generation, 5G) communications system. The base station 101 may further be another network device serving as a base station, or particularly, may be a terminal serving as a base station in D2D communication. The terminal 102 may include various hand-held devices, vehicle-mounted devices, wearable devices, and computing devices having a wireless communications function, or another processing device connected to a wireless modem, and various forms of user equipment (User Equipment, UE), mobile stations (Mobile Station, MS), and the like. The server 103 is configured to: obtain positioning assistance data, and send the positioning assistance data to the base station 101, and then the base station 101 sends the positioning assistance data to the terminal 102. The terminal 102 corrects positioning data of the terminal 102 based on the received positioning assistance data, to implement high positioning accuracy. The server 103 may include a positioning server, an evolved serving mobile location center (Evolved Serving Mobile Location Center, E-SMLC), a gateway mobile location center (gateway mobile location center, GMLC), a gateway mobile location center (gateway mobile location center, GMLC), an RTK server, or another type of server.

A system information change indication method provided in this embodiment of this application may be applied to various communications systems. System information may also be referred to as a system message. An LTE system may be used as an example for description in this application.

In the LTE system, system information is classified into a master information block (master information block, MIB) and a system information block (system information block, SIB) IB. The MIB mainly carries basic cell information such as a system frame number or cell bandwidth. SIBs are classified, for example, into an SIB1, an SIB2, and an SIB3 based on different content of the SIBs. A plurality of SIBs having a same scheduling period may be place in one piece of system information. A base station may add positioning assistance data to one or more SIBs for sending. There are many data types of the positioning assistance data, and transmission rates of different data types are different. Therefore, the base station may use different SIBs to transmit the positioning assistance data.

In this embodiment of this application, the positioning assistance data may be related data of positioning data corrected by a server based on a reference station, and the corrected related data may be referred to as a correction parameter or a modification parameter. A different global navigation satellite system (global navigation satellite system, GNSS) may obtain a different correction parameter by monitoring each time. There are different types of GNSSs, for example, the American global positioning system (global position system, GPS), the Russian Glonass, the European Galileo, the Chinese BeiDou Navigation Satellite System, and related augmentation systems, for example, the American wide area augmentation system (wide area augmentation system, WAAS), the European geostationary navigation overlay service (European geostationary navigation overlay service, EGNOS), the Japanese multi-functional transport satellite augmentation system (multi functional transport satellite augmentation system, MSAS), and the quasi-Zenith satellite system (quasi-Zenith satellite system, QZSS).

In this embodiment of this application, SIBs carrying positioning assistance data may be classified based on content and effects of the positioning assistance data. For example, in a possible implementation, some general-purpose positioning assistance data applicable to all GNSSs may be carried in a type of SIB based on different types of GNSSs, some non-general-purpose positioning assistance data is carried in a type of SIB, and the non-general-purpose positioning assistance data indicates that positioning assistance data provided based on different types of GNSSs is different. Each type of SIB includes at least one SIB. Certainly, a different classification may further be obtained on a different basis.

Based on the foregoing example, the following describes an SIB carrying positioning assistance data and a specific SIB classification. Specific description is shown in table 1.

**Table 1**

| | | | |
|---|---|---|---|
| First type of SIB GNSS general-purpose assistance data | SIB Type22.1 | GNSS-reference time | In existing SIB scheduling information |
| | SIB Type22.2 | GNSS-reference location | |
| | SIB Type22.3 | GNSS-ionosphere model | |
| | SIB Type22.4 | GNSS-earth orientation parameter | |
| | SIB Type22.5 | RTK public assistance data 1 | |
| | SIB Type22.6 | RTK public assistance data 2 | |
| | | ... | |
| Second type of SIB GNSS-related assistance data | SIB Type22.7 | GNSS-time model | In GNSS-related scheduling information |
| | SIB Type22.8 | GNSS-differential correction parameter | |
| | SIB Type22.9 | GNSS-navigation model | |
| | SIB Type22.10 | GNSS-real-time integrity | |
| | SIB Type22.11 | GNSS-data bit assistance data | |
| | SIB Type22.12 | GNSS-obtaining assistance data | |
| | SIB Type22.13 | GNSS-almanac | |
| | SIB Type22.14 | GNSS-UTC model | |
| | SIB Type22.15 | GNSS-assistance information | |
| | SIB Type22.16 | BDS-correction parameter | |
| | SIB Type22.17 | BDS-coordinate model parameter-r12 | |
| | SIB Type22.18 | RTK general assistance data 1 | |
| | SIB Type22.19 | RTK general assistance data 2 | |
| | | ... | |
| OTDOA assistance data | SIB Type23.1 | OTDOA UE assisted | In existing SIB scheduling information |
| | SIB Type23.2 | OTDOA UE-based | |

In the foregoing specific data type classification of Table 1, the reference time may specifically include information such as a time of week (time of week, TOW) and uncertainty of the reference time, or may include reference times of different GNSSs. The GNSS reference location refers to reference location information. The GNSS ionosphere model is a simulation impact model of a signal that is weakened after passing through ionosphere. The RTK public assistance data may include information such as an antenna descriptor.

It should be noted that the first type of SIB, that is, the public positioning assistance data, is mainly used to schedule transmission, and data is sent together. Specific content included in the data may also be used to distinguish between the different GNSSs, positioning assistance data of the different GNSSs are all sent. When receiving the data, the terminal distinguishes between and uses the data. For a GNSS time, the first type of SIB may specifically include the reference times of the different GNSSs. If supporting only the GPS, the terminal may use only a GPS reference time. However, from a perspective of the terminal, regardless of a specific supported satellite system, the terminal may receive the messages. The second type of SIB, that is, the GNSS-related positioning assistance data, may distinguish between and send the different GNSSs during scheduling transmission of the base station, and the terminal may selectively receive positioning assistance data of a GNSS supported by the terminal.

For the second type of SIB, that is, the GNSS-related positioning assistance data, a specific type may also be understood as a type determined by both of the two types. For example, the GNSS-time model, that is, a UTC model of a particular GNSS, may be a GPS UTC model, a BDS UTC model, or the like. In the second type of SIB, that is, the GNSS-related positioning assistance data, "GNSS-" is used to indicate a prefix data type, and indicate a parameter that may distinguish between the different GNSSs, and distinguishing of the GNSSs may be specifically implemented through scheduling, for example, through scheduling in the SIB 1. Specifically, the UTC model refers to a set of parameters that are of the GNSS time and that are related to a UTC. The navigation model includes satellite information, ephemeris information, a clock correction parameter, and the like of the different GNSSs. The real-time integrity refers to a real-time status of a satellite navigation system. The data bit assistance data is used for a specific satellite signal during a jump. The GNSS-assistance information is assistance information of the different GNSSs. The differential correction parameter includes correction parameter information of different satellite systems. The RTK general assistance data is assistance data of the different GNSSs. When sending this type of data to the base station, a positioning server needs to indicate a specific data type of a specific GNSS. When this type of information is scheduled, an implementation is that in the SIB1, an existing scheduling method may be used to schedule the information, or GNSS information, optional SBAS information, and a corresponding SIB may be indicated for each time of scheduling. An SBAS is one of the GNSSs. When a GNSS type is the SBAS, the SBAS may further be distinguished into the American WAAS, the Russian system for differential corrections and monitoring (system for differential corrections and monitoring, SDCM), the European EGNOS, the Japanese MSAS, and the Indian GPS aided geo augmented navigation (GPS aided geo augmented navigation, GAGAN). Alternatively, different SIBs are bound to the different GNSSs and/or specific SBAS assistance data content.

In addition, one or more types of or a combination of several types of data listed in Table 1 may also be specifically classified, and are placed into the different SIBs. If the classification is performed based on one type of data, a type of data is selected as a classification basis. If the classification is performed based on the several types of data, at least two types of data in the foregoing table are selected as a basis of at least two classifications. If the classification is performed based on the combination of the several types of data, to be specific, for one classification, the foregoing at least two types of data are required as a classification basis.

This specification provides only one SIB classification. There are many specific SIB classification manners in which different parameters may be included as stated above, the different GNSSs may be distinguished between, different positioning methods may be distinguished between, or the like. Furthermore, at least one piece of the foregoing information may be included in a same SIB, and the information is broadcast in a particular SIB by using a particular positioning method of a particular GNSS. A specific positioning method may include a positioning method such as a location differential positioning method, a pseudo range differential positioning method such as a phase smooth pseudo range differential positioning method, a carrier phase differential positioning method, a local area differential GPS positioning method, a wide area differential GPS positioning method, a virtual reference station (Virtual Reference Station, VRS) network RTK positioning method, a media access control (media access control, MAC) network RTK positioning method, an area correction parameter (Flchenkorrekturparameter, FKP) network RTK positioning method, a network pseudo range phase differential (real time DGPS, RTD) positioning method, and a state space representation (state space representation, SSR) positioning method. A differential global positioning system (differential global positioning system, DGPS) may further include an OTDOA positioning method and the like.

The following specifically describes a system information change indication method in which positioning assistance data is carried. As shown in FIG. 2, in an embodiment of this application, a system information change indication is implemented in the following manners.

For ease of the description, an SIB carrying positioning assistance data is referred to as a first SIB in this embodiment of this application. For a terminal, information that needs to be obtained as soon as possible is placed into an earlier SIB. For example, an SIB1 carries scheduling information of another SIB. In this embodiment of this application, for distinguishing, a type of SIB that is similar to the SIB1 is referred to as a second SIB.

In this embodiment of this application, if determining that the SIB carrying the positioning assistance data is changed, a base station notifies the terminal by using a specific change indication, and the terminal may determine, based on the change indication, that the SIB carrying the positioning assistance data is changed. A terminal that does not need to be positioned does not need to re-read a changed first SIB. After determining that the first SIB is changed, a terminal that needs to be positioned needs to read the first SIB. In this way, overheads of the terminal that does not need to be positioned can be reduced by clearly indicating whether a positioning-related SIB is changed. Further, the second SIB may further carry a value tag (value tag), and the value tag is used to indicate that one or more first SIBs are changed. In this way, the terminal that needs to be positioned may further clearly determine a specific changed first SIB or specific changed first SIBs by using the value tag, and only need to read the changed first SIB or the first SIB that is needs to be read by the terminal, thereby improving efficiency of obtaining the positioning assistance data by the terminal that needs to be positioned. Usually, the terminal first needs to obtain an indication of the value tag. Therefore, the second SIB is usually the SIB1.

The following describes a procedure of the system information change indication in detail by using specific steps.

Step 201. The base station determines that a first SIB in to-be-sent system information is changed.

Step 202. The base station sends, to the terminal, a message carrying a change indication, and the terminal obtains the change indication carried in the message sent by the base station. The change indication is used to notify the terminal that the first SIB is changed.

Step 203. The terminal determines, based on the change indication, that the first system information block SIB that is in the system information and that carries the positioning assistance data is changed.

Step 204. If needing to be positioned, the terminal reads the first SIB that is in the system information and that carries the positioning assistance data.

Specifically, after receiving the change indication, the terminal should receive an updated system message in a next system message time window that includes the positioning assistance data, or receive an updated system message within a next system message change period.

Specifically, in step 201, the base station may determine, in any one of the following several manners, that the first SIB is changed.

For example, the base station receives assistance data sent by a server, indicating that the data is new data, in other words, the assistance data is changed. Otherwise, the base station considers that the assistance data is not changed. That the assistance data is changed means that the first SIB is changed.

Alternatively, when sending the data, the server indicates whether the data is the new data, and the base station may determine, by using the indication of the server, whether the assistance data is changed.

Alternatively, the server does not indicate whether the data is the new data, and after receiving the assistance data, the base station determines whether the assistance data is changed.

The message that carries the change indication and that is sent by the base station to the terminal may be one of the following types of messages: a paging message, a radio resource control (radio resource control, RRC) message, a long term evolution positioning protocol (LTE-position protocol, LPP) message, or a system message. If the message is the LPP message, the notification is notified by a positioning server to the base station and is forwarded by the base station. To be specific, when the assistance data sent by the positioning server to the base station is changed, the positioning server in a connection state sends a piece of indication information to UE. The indication information is used to indicate that the system message including the positioning assistance data is changed.

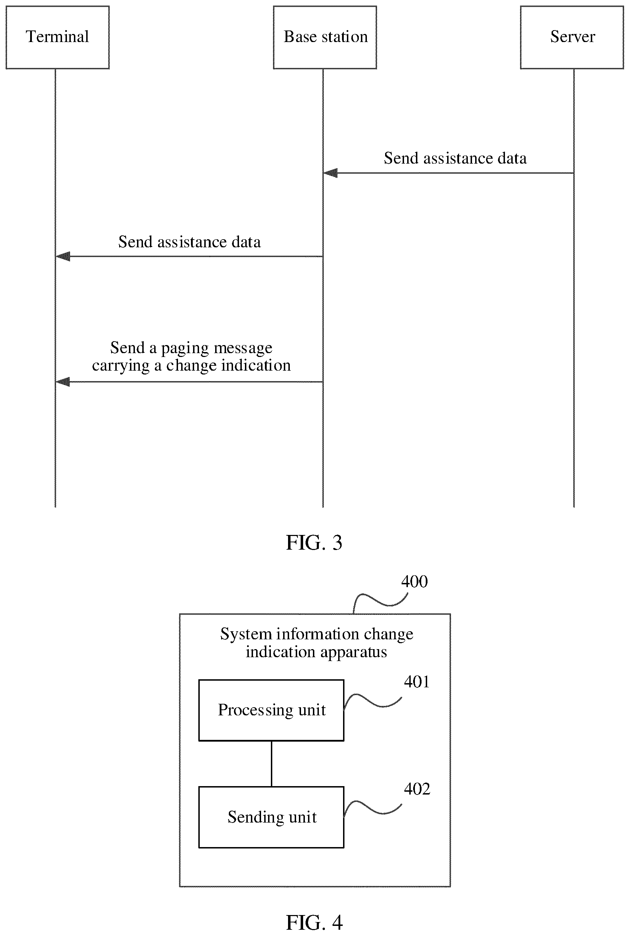

Usually, as shown in FIG. 3, the server sends, to the base station, the system information carrying the assistance data, and when determining that the first SIB is changed, the base station sends the paging message, where the paging message carries change indication information. The base station broadcasts the system information carrying the assistance data. After receiving the paging message, the terminal determines, based on the change indication, that the positioning assistance data is changed, and receives data in a next system information transmission interval or receives data in a next change period.

Further, the base station adds at least one value tag (value tag) to the second SIB, and uses the value tag to indicate whether a corresponding first SIB is changed. For example, the second SIB is the SIB 1. In this case, the base station may send the message carrying the change indication again, for example, the paging message or other dedicated signaling, or may not send the message. If the message is not sent, the terminal may also learn of the changed first SIB by using the second SIB. If the message is sent, the terminal first determines, by using the change indication, that the first SIB is changed, and then determines a specific changed SIB based on the value tag in the SIB 1. A value tag may indicate whether positioning assistance data in specified m first SIBs is changed, where m is a positive integer. In other words, a value tag may indicate whether a first SIB is changed, or indicate whether a group of first SIBs are changed. Specifically, the positioning assistance data included in the m first SIBs that are indicated by the value tag is applicable to various types of satellite navigation systems, or the positioning assistance data included in the m first SIBs that are indicated by the value tag is applicable to a specified type of satellite navigation system.

Optionally, based on the foregoing description of the classification of the SIB carrying the positioning assistance data, a value tag may indicate whether a type of SIB is changed. In other words, each value tag corresponds to an SIB. If the system message is changed, 1 is added to a value. The terminal may compare whether a stored value is the same as the value of the value tag in the system message, and if the stored value is different from the value of the value tag in the system message, the terminal obtains the system message.

For example, the base station adds two value tags to the SIB1, represented by a first value tag and a second value tag. The first value tag is used to indicate whether the positioning assistance data in the first type of SIB is changed, and the positioning assistance data included in the first type of SIB is applicable to supporting UE of various types of satellite navigation systems. The second value tag is used to indicate whether positioning assistance data in the second type of SIB is changed, and the positioning assistance data included in the second type of SIB is related to a satellite navigation system.

Certainly, there may be another manner of classifying SIBs carrying positioning assistance data. In conclusion, regardless of a classification manner, the value tag may be used to indicate whether the type of SIB is changed. Alternatively, a value tag may indicate whether two or more types of SIBs are changed. The base station and the terminal agree a classification manner in advance, for example, the classification manner is configured by default or indicated through scheduling.

The value tag may also be used to indicate that a system message that includes a different positioning method is changed. Specifically, one value tag may be used in each of or several positioning methods, and when a corresponding system message is changed, the terminal may receive only a system message that supports a positioning method. Specifically, system messages in different positioning methods may be configured by default, or may be configured based on scheduling information. For example, in the second SIB, there is a value tag corresponding to an SIB that includes SSR data, and there is another value tag corresponding to an SIB that includes an OTODA. When the value tag corresponding to the OTDOA SIB is changed, only a terminal that uses an OTDOA method re-reads a corresponding system message. Certainly, in a same SIB, data of the different positioning methods may be distinguished between through scheduling. If each method has a corresponding value tag, it may be correspondingly determined whether the data is changed, and the system message is received.

In a possible implementation, the value tag may also be used to indicate whether different content of each SIB type is changed. Specifically, if a GNSS needs to be indicated during the scheduling, the value tag may be added. In other words, each GNSS type is indicated by using a value tag. When learning that system information of a GNSS type supported by the terminal is changed through a value tag change, the terminal correspondingly receives the system information. In addition, an identifier and a value tag may be alternatively set for each satellite identifier. When determining that a particular satellite system message is changed or that the data does not exist before, the terminal receives the message.

All change indications in an embodiment of this application may also be used to indicate a change of positioning assistance data in a different positioning method, for example, at least one field in the paging message indicates assistance data related to a positioning method. For example, there is a field indicating whether OTDOA data is changed. Specifically, the OTDOA further includes a terminal-assisted OTDOA and a terminal-based OTDOA, and changes may be indicated by using one piece of indication information or may be respectively indicated. A method for the value tag method is identical.

Certainly, in a more possible manner, different system messages are placed with positioning assistance data in different transmission periods. Therefore, distinguishing and indicating may be performed by setting different value tags.

All indication information in the solution may also be used to indicate whether the system message is changed.

In conclusion, when determining, based on the change indication sent by the base station, that the first SIB is changed, the terminal further compares a value tag carried in the second SIB and a value tag stored by the terminal. If the value tags are inconsistent, the terminal determines that the first SIB indicated by the value tag is changed, and when needing to be positioned, the terminal only needs to read the changed first SIB.

A value range of the foregoing value tag is within an integer set that includes at least 1 bit. For example, if 1 bit is included, the value range is (0, 1), to be specific, 0 is changed to 1, or 1 is changed to 0 each time the system message is changed. If 2 bits are included, the value range is (0, 3).

Specifically, after the terminal receives a positioning-related system message change indication carried in the paging message, a value tag in the SIB 1 may be changed, or may not be changed, and this is not limited herein. If there are additional value tags corresponding to different system messages including positions, a corresponding system message may be received based on a system message in which a value tag correspondingly indicates a change.

Further, the existing value tag in the SIB1 may include a change of scheduling information of the system message having the positioning assistance data. The value tag and the existing value tag that is used to indicate that the positioning system message is changed are different value tags.

In another possible implementation, the change indication sent by the base station may be the foregoing value tag. An indication manner of the value tag is same as the foregoing indication manner in which the SIB1 carries the value tag. When the paging message carries the value tag, the foregoing indication manner in which the SIB1 carries the value tag may be fully referred. For example, if the change indication is sent in the paging message, it means that the base station adds at least one value tag to the paging message to indicate a specific change first SIB. When another SIB is not changed, the terminal does not need to read the second SIB. After receiving the paging message, the terminal can quickly determine, based on the paging message, a specific first SIB or specific first SIBs that needs/need to be read. For example, the base station adds the first type of value tag and the second of type value tag to the paging message. After receiving the paging message, the terminal respectively compares the first type of value tag and the second of type value tag with the value tag stored by the terminal. If learning that the first type of value tag is changed and the second type of value tag is not changed, the terminal reads only the first type of SIB indicated by the first type of value tag, and does not need to read the second type of SIB indicated by the second type of value tag.

If the terminal is in a connection state, the base station may further add the change indication or the value tag to dedicated signaling.

In addition, if some positioning assistance data has a relatively high change rate, the foregoing change indication information is not used for the indication information. A system message including the assistance data having the high change rate does not need a change indication. When needing to be positioned by using the information, the terminal may choose to keep receiving the system message including the content until location information is calculated.

Different types of data or a combination of data types (for example, a GNSS, a positioning method, and a data parameter) may use, in different SIBs, a value tag manner to notify that the system message is changed.

Based on an inventive concept the same as that of the foregoing system information change indication method, as shown in FIG. 4, an embodiment of this application further provides a system information change indication apparatus 400. The system information change indication apparatus 400 is configured to perform the method shown in FIG. 2, including:
a processing unit 401, configured to determine that a first system information block SIB in to-be-sent system information is changed, where the first SIB carries positioning assistance data; and
a sending unit 402, configured to send, to a terminal, a message carrying a change indication, where the change indication is used to notify the terminal that the first SIB is changed.

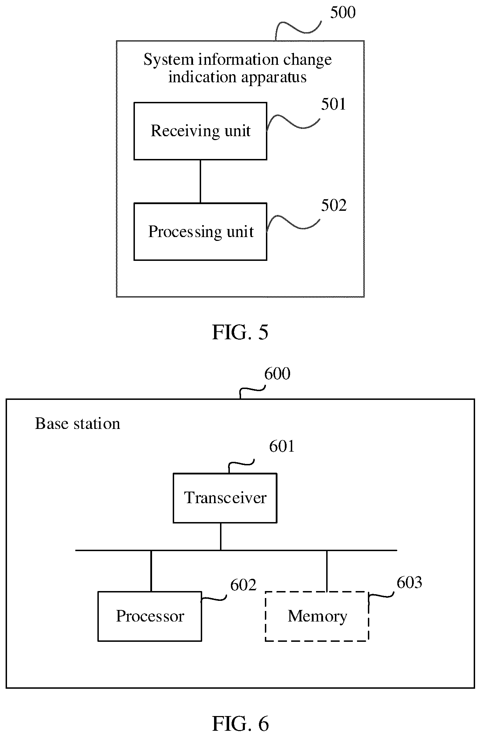

Based on an inventive concept the same as that of the foregoing system information change indication method, as shown in FIG. 5, an embodiment of this application further provides a system information change indication apparatus 500. The system information change indication apparatus 500 is configured to perform the method shown in FIG. 2, including:
a receiving unit 501, configured to obtain a change indication carried in a message sent by a base station; and
a processing unit 502, configured to determine, based on the change indication, that a first system information block SIB that is in system information and that carries positioning assistance data is changed, where
the processing unit 502 is further configured to: if needing to be positioned, read the first SIB that is in the system information and that carries the positioning assistance data.

Optionally, a specified second SIB in the system information carries at least one value tag, and any value tag is used to indicate whether positioning assistance data in specified m first SIBs is changed, where m is a positive integer; and
the processing unit 502 is further configured to: read the at least one value tag carried in the second SIB, determine a changed first SIB in the system information based on the at least one value tag, and read the changed first SIB.

Based on an inventive concept the same as that of the foregoing system information change indication method, as shown in FIG. 6, an embodiment of this application further provides a base station 600. The base station 600 may be configured to perform the method shown in FIG. 2. The base station 600 includes a transceiver 601, a processor 602, and a memory 603. The processor 602 is configured to execute a set of code, and when the code is executed, the execution enables the processor 602 to perform the method shown in FIG. 2. The base station 600 may further include the memory 603, configured to store the code executed by the processor 602.

The processor 602 may be a central processing unit (central processing unit, CPU), a network processor (network processor, NP), or a combination of the CPU and the NP.

The processor 602 may further include a hardware chip. The foregoing hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable gate array (field-programmable gate array, FPGA), a generic array logic (generic array logic, GAL), or any combination thereof.

The memory 603 may include a volatile memory (volatile memory), for example, a random-access memory (random-access memory, RAM); the memory 603 may include a non-volatile memory (non-volatile memory), for example, a flash memory (flash memory), a hard disk drive (hard disk drive, HDD), or a solid-state drive (solid-state drive, SSD); or the memory 603 may include a combination of the foregoing memories.

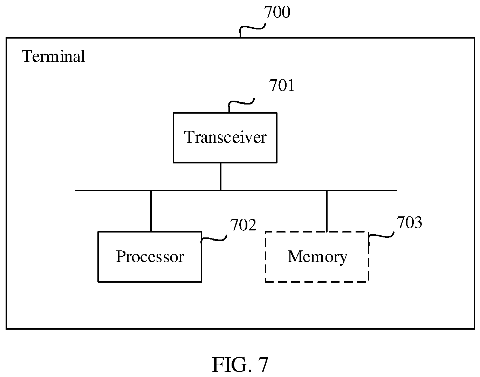

Based on an inventive concept the same as that of the foregoing system information change indication method, as shown in FIG. 7, an embodiment of this application further provides a terminal 700. The terminal 700 may be configured to perform the method shown in FIG. 2. The terminal 700 includes a transceiver 701, a processor 702, and a memory 703. The processor 702 is configured to execute a set of code, and when the code is executed, the execution enables processor 702 to perform the method shown in FIG. 2. The terminal 700 may further include the memory 703, configured to store the code executed by the processor 702.

The processor 702 may be a central processing unit (central processing unit, CPU), a network processor (network processor, NP), or a combination of the CPU and the NP.

The processor 702 may further include a hardware chip. The foregoing hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable gate array (field-programmable gate array, FPGA), a generic array logic (generic array logic, GAL), or any combination thereof.

The memory 703 may include a volatile memory (volatile memory), for example, a random-access memory (random-access memory, RAM); the memory 703 may include a non-volatile memory (non-volatile memory), for example, a flash memory (flash memory), a hard disk drive (hard disk drive, HDD), or a solid-state drive (solid-state drive, SSD); or the memory 703 may include a combination of the foregoing memories.

An embodiment of this application provides a computer storage medium storing a computer program. The computer program is used to perform the method shown in FIG. 2.

An embodiment of this application provides a computer program product including an instruction. When being executed on a computer, the instruction enables the computer to perform the method shown in FIG. 2.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or any other programmable data processing device, so that a series of operations and steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn of the basic inventive concept. Therefore, the following claims are intended to be construed as to cover the preferred embodiments and all changes and modifications falling within the scope of this application.

Obviously, persons skilled in the art can make various modifications and variations to the embodiments of this application without departing from the spirit and scope of the embodiments of this application. This application is intended to cover these modifications and variations to the embodiments of this application provided that they fall within the scope of protection defined by the following claims of this application and their equivalent technologies.

## Claims

1. A system information change indication method, comprising:
determining, by a base station, that a first system information block SIB in to-be-sent system information is changed, wherein the first SIB carries positioning assistance data; and
sending, by the base station to a terminal, a message carrying a change indication, wherein the change indication is used to notify the terminal that the first SIB is changed.

2. The method according to claim 1, wherein a second SIB in the system information carries at least one value tag, and one of the at least one value tag is used to indicate whether positioning assistance data in specified m first SIBs is changed, wherein m is a positive integer.

3. The method according to claim 1, wherein the change indication is at least one value tag, and one of the at least one value tag is used to indicate whether positioning assistance data in specified m first SIBs is changed, wherein m is a positive integer.

4. The method according to claim 2 or 3, wherein the specified m first SIBs comprise public positioning assistance data; or the specified m first SIBs comprise positioning assistance data related to a satellite navigation system.

5. The method according to claim 2 or 3, wherein the at least one value tag comprises a first value tag and a second value tag;
the first value tag is used to indicate whether the positioning assistance data in a first type of SIB is changed, and the positioning assistance data comprised in the first type of SIB is public positioning assistance data; and
the second value tag is used to indicate whether positioning assistance data in a second type of SIB is changed, and the positioning assistance data comprised in the second type of SIB is positioning assistance data related to a satellite navigation system.

6. The method according to any one of claims 1 to 5, wherein the message carrying the change indication comprises any one of the following messages:
a paging message, a radio resource control RRC message, a long term evolution positioning protocol LPP message, or a system message.

7. A system information change indication method, comprising:
obtaining, by a terminal, a change indication carried in a message sent by a base station;
determining, by the terminal based on the change indication, that a first system information block SIB that is in system information and that carries positioning assistance data is changed; and
if needing to be positioned, reading, by the terminal, the first SIB that is in the system information and that carries the positioning assistance data.

8. The method according to claim 7, wherein a specified second SIB in the system information carries at least one value tag, and any value tag is used to indicate whether positioning assistance data in specified m first SIBs is changed, wherein m is a positive integer; and
the method further comprises:
reading, by the terminal, the at least one value tag carried in the second SIB, determining a changed first SIB in the system information based on the at least one value tag, and reading the changed first SIB.

9. The method according to claim 7, wherein the change indication is at least one value tag, and any value tag is used to indicate whether positioning assistance data in specified m first SIBs is changed, wherein m is a positive integer.

10. The method according to claim 8 or 9, wherein the specified m first SIBs comprise public positioning assistance data; or the specified m first SIBs comprise positioning assistance data related to a satellite navigation system.

11. The method according to claim 8 or 9, wherein the at least one value tag comprises a first value tag and a second value tag;
the first value tag is used to indicate whether the positioning assistance data in the first type of SIB is changed, and the positioning assistance data comprised in the first type of SIB is public positioning assistance data; and
the second value tag is used to indicate whether positioning assistance data in a second type of SIB is changed, and the positioning assistance data comprised in the second type of SIB is positioning assistance data related to a satellite navigation system.

12. The method according to any one of claims 7 to 11, wherein the message carrying the change indication comprises any one of the following messages:
a paging message, a radio resource control RRC message, a long term evolution positioning protocol LPP message, or a system message.

13. A system information change indication apparatus, comprising:
a processing unit, configured to determine that a first system information block SIB in to-be-sent system information is changed, wherein the first SIB carries positioning assistance data; and
a sending unit, configured to send, to a terminal, a message carrying a change indication, wherein the change indication is used to notify the terminal that the first SIB is changed.

14. The apparatus according to claim 13, wherein a second SIB in the system information carries at least one value tag, and one of the at least one value tag is used to indicate whether positioning assistance data in specified m first SIBs is changed, wherein m is a positive integer.

15. The apparatus according to claim 13, wherein the change indication is at least one value tag, and one of the at least one value tag is used to indicate whether positioning assistance data in specified m first SIBs is changed, wherein m is a positive integer.

16. The apparatus according to claim 14 or 15, wherein the specified m first SIBs comprise public positioning assistance data; or the specified m first SIBs comprise positioning assistance data related to a satellite navigation system.

17. The apparatus according to claim 14 or 15, wherein the at least one value tag comprises a first value tag and a second value tag;
the first value tag is used to indicate whether the positioning assistance data in the first type of SIB is changed, and the positioning assistance data comprised in the first type of SIB is public positioning assistance data; and
the second value tag is used to indicate whether positioning assistance data in a second type of SIB is changed, and the positioning assistance data comprised in the second type of SIB is positioning assistance data related to a satellite navigation system.

18. The apparatus according to any one of claims 13 to 17, wherein the message carrying the change indication comprises any one of the following messages:
a paging message, a radio resource control RRC message, a long term evolution positioning protocol LPP message, or a system message.

19. A system information change indication apparatus, comprising:
a receiving unit, configured to obtain a change indication carried in a message sent by a base station; and
a processing unit, configured to determine, based on the change indication, that a first system information block SIB that is in system information and that carries positioning assistance data is changed, wherein
the processing unit is further configured to: if needing to be positioned, read the first SIB that is in the system information and that carries the positioning assistance data.

20. The apparatus according to claim 19, wherein a specified second SIB in the system information carries at least one value tag, and any value tag is used to indicate whether positioning assistance data in specified m first SIBs is changed, wherein m is a positive integer; and
the processing unit is further configured to:
read the at least one value tag carried in the second SIB, determine a changed first SIB in the system information based on the at least one value tag, and read the changed first SIB.

21. The apparatus according to claim 19, wherein the change indication is at least one value tag, and any value tag is used to indicate whether positioning assistance data in specified m first SIBs is changed, wherein m is a positive integer.

22. The apparatus according to claim 20 or 21, wherein the specified m first SIBs comprise public positioning assistance data; or the specified m first SIBs comprise positioning assistance data related to a satellite navigation system.

23. The apparatus according to claim 20 or 21, wherein the at least one value tag comprises a first value tag and a second value tag;
the first value tag is used to indicate whether the positioning assistance data in the first type of SIB is changed, and the positioning assistance data comprised in the first type of SIB is public positioning assistance data; and
the second value tag is used to indicate whether positioning assistance data in a second type of SIB is changed, and the positioning assistance data comprised in the second type of SIB is positioning assistance data related to a satellite navigation system.

24. The apparatus according to any one of claims 19 to 23, wherein the message carrying the change indication comprises any one of the following messages:
a paging message, a radio resource control RRC message, a long term evolution positioning protocol LPP message, or a system message.
